(19) Europäisches Patentamt
European Patent Office
Office européen des brevets

(11) **EP 2 995 591 B1**

(12) **EUROPEAN PATENT SPECIFICATION**

(45) Date of publication and mention
of the grant of the patent:
**13.01.2021 Bulletin 2021/02**

(51) Int Cl.:
*C02F 1/04* (2006.01)          *C02F 1/16* (2006.01)
*C02F 101/10* (2006.01)        *C02F 101/30* (2006.01)
*C02F 101/32* (2006.01)

(21) Application number: **15183006.4**

(22) Date of filing: **28.08.2015**

(54) **METHOD FOR TREATING WASTEWATER**

VERFAHREN ZUR ABWASSERBEHANDLUNG

PROCÉDÉ DE TRAITEMENT DES EAUX USÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2014 KR 20140113295**

(43) Date of publication of application:
**16.03.2016 Bulletin 2016/11**

(73) Proprietor: **Hanwha Chemical Corporation
Seoul 04541 (KR)**

(72) Inventors:
• **Kim, Byung Joo
59662 Jeollanam-do (KR)**
• **Kim, Seong Tae
21316 Incheon (KR)**

• **Kim, Cholok
28747 Chungcheongbuk-do (KR)**
• **Yoo, Taekyun
08725 Seoul (KR)**
• **Lee, Yang Ju
59664 Jeollanam-do (KR)**

(74) Representative: **Alt, Michael
Bird & Bird LLP
Maximiliansplatz 22
80333 München (DE)**

(56) References cited:
EP-A1- 2 690 071          EP-A2- 2 508 489
WO-A1-2013/029171        CN-A- 102 730 894
JP-A- H01 262 981        US-A- 4 219 508
US-A- 5 246 542          US-A- 5 783 084
US-A1- 2011 265 474      US-A1- 2014 127 786

**Description**

**CROSS-REFERENCE TO RELATED APPLICATIONS**

This application claims the benefit of priority to Korean Patent Application No. 10-2014-0113295 filed on August 28, 2014.

**BACKGROUND OF THE INVENTION**

**(a) Field of the Invention**

The present invention relates to a method for treating wastewater which is discharged from an Aldol process consisting of the steps of performing an evaporative concentration of wastewater comprising non-biodegradable organic compounds and salt components at a concentration of 10,000 ppm or more to separate a supernatant to an upper part and a concentrate to a lower part; using a part of the supernatant as a steam for fuel, and degrading a remaining part of the supernatant by microorganisms, wherein a vacuum system is used for the evaporative concentration of the wastewater, wherein the wastewater has a pH greater than 6, wherein the method is without acid treatment or use of extractants. More specifically, the present invention relates to a method for treating wastewater capable of treating wastewater that comprises non-biodegradable organic compounds and a high concentration of salt components and thus is difficult to treat by microorganisms by an environmentally-friendly and low energy method.

**(b) Description of the Related Art**

In various industrial-scale chemical processes, wastewater comprising a high concentration of salt components, organic compounds or catalyst residue is generated as by-products.

For example, an aldol condensation reaction which is industrially very important, refers to a process wherein linear or branched aldehyde is produced by reaction with olefin in the presence of a metal catalyst and ligand by hydroformylation known as an OXO-reaction, and then, alpha, beta-unsaturated aldehyde is produced through an aldol condensation reaction. The produced alpha, beta-unsaturated aldehyde is used as starting material or intermediate for synthesis of many organic compounds. And, if the alpha, beta-unsaturated aldehyde is completely hydrogenated, monohydric saturated alcohol is produced.

The aldol condensation reaction is promoted by acid or base, and in the industrial process, base, particularly sodium hydroxide is used a lot.

Biodegradation of such organic compounds in wastewater required high oxygen demand. The oxygen demand can be calculated by Chemical Oxygen Demand (COD). In a microbial treatment plant, as the contamination degree of wastewater is higher, oxygen demand increases, and for treating this, introduction of air in the wastewater should be increased, thus increasing energy consumption, or capacity expansion of treatment facilities is required. Otherwise, due to decrease in dissolved oxygen of the wastewater treatment facilities, death of microorganisms may be caused, or undesirable anaerobic degradation may be initiated.

Meanwhile, as one of the methods for treating wastewater generated from an aldol process, EP 0631988 discloses a method of mixing wastewater from an aldol process with another washing water, and then, acidifying to pH 0 to 6, and separating the formed organic phase and extracting the aqueous phase together with 2-ethylhexanol. Wherein the treated wastewater is sent to a water purifying facilities, while separated and removed organic impurities are distilled to recover an extractant.

The disadvantage of this method is that during the recovery of extract by distillation, high boiling components accumulated at the bottom of a distillation column interfere in the recovery rate, and temperature at the bottom of the distillation column continues to increase. Due to the high temperature, the high boiling compounds further condensate, finally generating deposits in the distillation column. In order to prevent temperature at the bottom from increasing above a certain level, a part of 2-ethylhexanol should remain at the bottom of a distillation column. And then, fresh 2-ethylhexanol should be always added to 2-ethylhexanol recycled to an extraction process because the 2-ethylhexanol is lost together with the high boiling components of the residue.

In order to avoid the disadvantage of the process of EP 0631988, EP 0926100 suggested a process of adjusting various wastewater streams from the production of 2-ethylhexanal and 2-ethylhexanol to pH 0 to 6 separately or after being transferred, and then, separating and removing an organic phase. And then, the aqueous phase from which most organic impurities have been removed is extracted with 2-ethylhexanal, so as to separate and remove organic components still dissolved or dispersed therein. However, this process also cannot avoid loss of 2-ethylhexanol.

EP 2 690 071 A1 provides a method for the treatment of alkaline wastewater comprising sodium ions and organic impurities, the method comprising the steps of a) contacting part of the wastewater with a cation exchange resin to obtain an acidic wastewater portion, b) mixing the acidic wastewater portion and the remaining wastewater portion optionally in the presence of a neutralizing solution to obtain an effluent having a pH of 5 to 9, and c) reducing the amount of the organic impurities from the effluent.

EP 2 508 489 A2 relates to a method of treating waste water produced during the nitration of compounds, which includes an appropriate pretreatment process and a vacuum evaporation process, so that acidic or alkaline aqueous waste water which is difficult to treat via conventional processes can be easily treated without performing microorganism treatment.

CN 102730894 A discloses a method for treating waste alkaline liquor produced in a butanol and octanol production device and belongs to the field of treatment on waste water produced by organic compound production. The method is characterized by comprising the following steps of a, normal-pressure steam stripping, b, low-pressure evaporation concentration, c, acidification phase-separation, d, organic phase rectification, and e, simple evaporation concentration.

JP H01 262981 A discloses a method to perform waste water treatment efficiently, by adding alkali substances to waste water to effect reaction therebetween, guiding nonvolatile compounds and volatile compounds to be vaporized.

## SUMMARY OF THE INVENTION

It is an object of the present invention to provide a method as specified in claim 1 for treating wastewater which is discharged from an Aldol process, and comprises a high concentration of impurities such as salt components and non-biodegradable organic compounds without acid treatment or use of extractants.

In order to solve the above problem, the present invention provides a method for treating wastewater which is discharged from an Aldol process consisting of the steps of performing an evaporative concentration of wastewater comprising non-biodegradable organic compounds and salt components at a concentration of 10,000 ppm or more to separate a supernatant to an upper part and a concentrate to a lower part; using a part of the supernatant as a steam for fuel, and degrading a remaining part of the supernatant by microorganisms, wherein a vacuum system is used for the evaporative concentration of the wastewater, wherein the wastewater has a pH greater than 6, wherein the method is without acid treatment or use of extractants.

According to the method for treating wastewater which is discharged from an Aldol process, wastewater comprising a high concentration of impurities such as salt components and non-biodegradable organic compounds generated in various organic chemical processes can be purified by low energy and simple process steps.

The treatment method of the present invention does not use a separate extractant for extracting impurities and does not require a pretreatment process such as acidification for oil/water separation and the like, and thus, the process is simple, and various problems due to the introduction of pH modifiers or extractants can be prevented.

And, since the supernatant separated in the method for treating wastewater of the present invention can be used as steam for fuel of another process, total flux of discharged wastewater may be decreased, and simultaneously, energy may be further reduced, and treatment load of microbial degradation may be reduced, thus rendering the treatment method environmentally friendly.

## BRIEF DESCRIPTION OF THE DRAWINGS

Fig. 1 shows a flow chart of the wastewater treatment method according to the conventional art.
Fig. 2 shows a flow chart of the wastewater treatment method according to one embodiment of the present invention.

## DETAILED DESCRIPTION OF THE EMBODIMENTS

As used herein, terms "a first", "a second" and the like are used to explain various constructional elements, and they are used only to distinguish one constructional element from other constructional elements.

And, the terms used herein are only to explain illustrative examples, and are not intended to limit the invention. A singular expression includes a plural expression thereof, unless it is expressly stated or obvious from the context that such is not intended.

And, in case it is stated that each constructional element is formed "on" or "above" each construction element, it means that each constructional element is formed directly on each constructional element, or that other constructional elements may be additionally formed between the layers or on the object or substrate.

Although various modifications can be made to the present invention and the present invention may have various forms, specific examples will be illustrated and explained in detail below.

Hereinafter, a method for treating wastewater according to specific embodiments of the invention will be explained in detail.

The method for treating wastewater which is discharged from an Aldol process of the present invention comprises the steps of performing an evaporative concentration of wastewater comprising non-biodegradable organic compounds and a high concentration of salt components to separate a supernatant to an upper part and a concentrate to a lower part; and using a part of the supernatant as a steam for fuel.

In the method for treating wastewater which is discharged from an Aldol process of the present invention, first, wastewater comprising non-biodegradable organic compounds and a high concentration of salt components is concentrated by evaporation.

As used herein, the term "wastewater" means water that is discharged from an Aldol process and includes waste or impurities to be removed or degraded.

And, as used herein, the non-biodegradable organic compounds mean organic substances that are difficult to directly treat in a microbial wastewater treatment plant without an oil separation process such as acid treatment, extraction or evaporative concentration. The salt components mean ions hindering microbial coagulation when wastewater is biologically treated, and representative examples thereof include monovalent cationic ions such as $Na^+$ or $K^+$.

Wastewater to be treated in the present invention comprises such non-biodegradable organic compounds and thus has high COD, and comprises a high concentration of salt components such as a sodium salt ($Na^+$), and thus, is difficult to degrade by microorganisms even after acid treatment or treatment with an extractant.

In case wastewater comprises non-degradable organic compounds at a high concentration, a microbial treatment system should be prepared on a large scale, requiring excessive operation cost of microbial treatment system, which is not preferable in terms of economic efficiency. And, if short of treatment capacity, growth and coagulation of microorganisms in the aeration tank of wastewater treatment system may be hindered, causing death of microorganisms due to decrease in dissolved oxygen.

In addition, the salt components are difficult to treat by microorganisms, and in case a high concentration of salt components are included in wastewater, they can be generally removed by the evaporative concentration; however, in this case, organic substances that have lower boiling point than water or form minimum azeotropic point lower than water are separated together the supernatant, thus requiring a separate oil/water separation process.

An industrial-scale chemical process inevitably discharges a significant amount of wastewater contaminated with organic/inorganic compounds such as by-products, organic solvents, catalyst residue, salts and the like.

The aldol process, which is important in the industrial preparation process of alcohol, specifically includes an aldol addition reaction, an aldol condensation reaction of aldehyde and aldol, and an aldol condensation reaction of aldehyde and ketone. In the aldol process, an oxo reaction for preparing aldehyde, which is raw material of aldol reaction, and a catalyst preparation reaction for preparing a catalyst used for the oxo reaction, and the like, waste water comprising a high concentration of non-biodegradable organic compounds and basic compounds such as sodium hydroxide (NaOH) is produced.

In the organic compounds in wastewater, besides biodegradable substances that can be mostly degraded by microorganisms, many non-biodegradable compounds that are difficult to be degraded by microorganisms exist, and biodegradation of these organic compounds in microbial treatment plant requires high oxygen demand. Such oxygen demand can be calculated by chemical oxygen demand (COD). As contamination level of wastewater is higher, oxygen demand increases, and for treating this, introduction of air in the wastewater should be increased. Thus, energy consumed in a degradation process increases or capacity expansion of treatment facilities is required. Otherwise, due to decrease in dissolved oxygen of wastewater treatment facilities, death of microorganisms may be caused, or undesirable anaerobic degradation may be initiated.

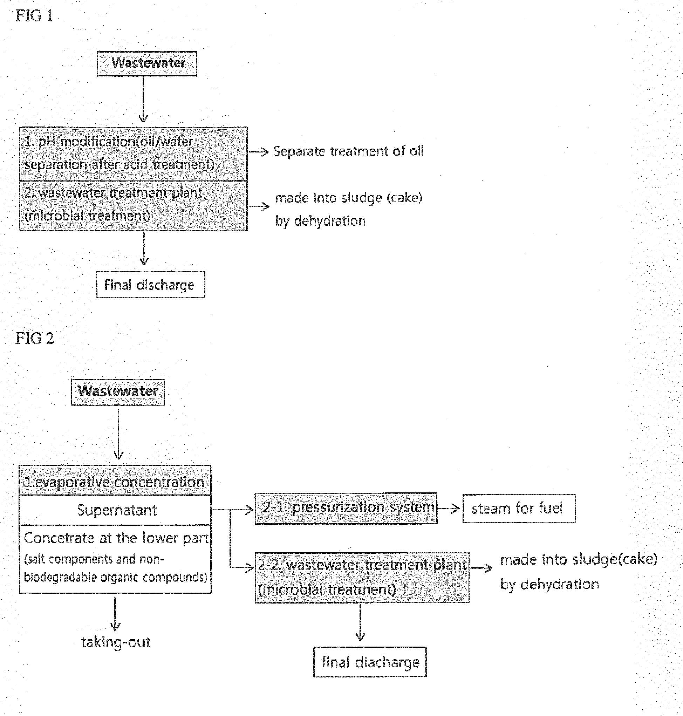

Fig. 1 shows a flow chart of the wastewater treatment method of the conventional art.

Referring to Fig. 1, in the wastewater treatment method according to the conventional art, first, pretreatment of acidifying wastewater to separate into an organic phase and an aqueous phase is conducted.

Next, the pretreated wastewater is sent to a wastewater treatment plant to treat by microorganisms (degradation of organic compounds), wastewater with decreased organic compounds is discharged, and solid waste made into the form of a cake by dehydration is sent to an additional treatment process.

Wherein, since even wastewater passing through pretreatment contains a high concentration of salt components and non-biodegradable organic compounds in large quantities, wastewater treatment system should be expanded to a large scale when treating by microorganisms, thus consuming high operation cost. And, in case wastewater comprising a large quantity of organic compounds is introduced in a wastewater treatment plant at a time, growth or coagulation of microorganisms in the aeration tank of the wastewater treatment plant may be hindered, and dissolved oxygen may decrease to cause death of microorganisms.

Meanwhile, according to the wastewater treatment method of the present invention, wastewater comprising non-biodegradable organic compounds and a high concentration of salt components is concentrated by evaporation before microbial degradation, and the supernatant with drastically decreased non-degradable organic compounds, from which salt components are substantially removed, is separated from the wastewater, thereby facilitating microbial degradation.

And, by supplying a part of the supernatant separated by the evaporative concentration to a heating furnace and using as steam for fuel, flux of finally discharged wastewater may be decreased, and furthermore, a small amount of organic compounds included in the supernatant may be used as fuel.

Fig. 2 shows a flow chart of the wastewater treatment method according to one example of the present invention.

Referring to Fig. 2, in the wastewater treatment method according to one example of the present invention, an evaporative concentration process is conducted without introducing a pH modifier such as acid or base in wastewater.

As the wastewater is firstly concentrated by evaporation, the supernatant is separated to an upper part of the column, and concentrate of organic compounds and salt components is separated to a lower part, and the supernatant becomes substantially free of salt components and non-biodegradable organic compounds.

A part of the supernatant stream may be separated, supplied to a heating furnace and used as a steam for fuel. As such, by using the supernatant as the steam for fuel, flux of wastewater to be treated is reduced, and furthermore, a small amount of organic compounds remaining in the supernatant is combusted to supply quantity of heat to other processes.

Meanwhile, a part of the supernatant from which salt ingredients and non-biodegradable organic compounds are substantially removed is sent to a wastewater treatment plant, and discharged after conducting microbial degradation for the remaining organic compounds, and solid waste made in the form of a cake by dehydration is sent to an additional treatment process. Wherein, since the supernatant introduced in the wastewater treatment plant includes drastically decreased organic compounds, microbial degradation is facilitated, thus reducing operation cost of wastewater treatment plant, and remarkably reducing the amount of generated solid waste.

According to one embodiment of the invention, the wastewater is wastewater generated in an aldol process or in a reaction for preparing raw material and/or catalyst used in the aldol process. Also disclosed is that it may be applied for all industrial wastewater that is generated from various chemical processes, and comprises non-biodegradable organic compounds and a high concentration of salt components and thus is difficult to directly degrade by microorganisms, or requires large treatment capacity. As the wastewater is wastewater discharged from an aldol process, the wastewater may comprise branched isomers of aldehyde, linear or branched alcohol having the same carbon number as aldehyde, linear or branched alcohol having one more carbon number than aldehyde. And, as the wastewater is wastewater discharged from an aldol process, the wastewater comprises sodium salt at a high concentration at about 10,000 ppm or more.

In the conventional art, for the wastewater comprising non-biodegradable organic compounds and a high concentration of salt components, a method of introducing acid so as to acidify to pH of 6 or less in a pretreatment process, and then, separating into an organic phase and an aqueous phase to remove by a phase separator, or introducing an extractant so as to extract and remove organic compounds was known. However, according to these methods, an acid compound and/or an extractant should be additionally introduced, which causes additional cost and increases concentration of salt components and total flux of wastewater, and the extractant may become another contaminant and is needed to be recovered. Thus, economical burden of total wastewater treatment process increases and a multi-step treatment process should be passed, which is not preferable in terms of process economy.

However, according to the present invention, since evaporative concentration of wastewater is conducted without conducting a step of controlling the pH or introducing an extractant, the above problems caused by the introduction of additional material is prevented, and flux of wastewater to be treated does not increase.

According to the invention, the wastewater is wastewater discharged from an aldol process, it has a basic pH greater than 6, for example greater than about 6 and about 14 or less.

By performing the evaporative concentration of the wastewater without a pretreatment process such as introducing of a pH modifier and the like, the supernatant with decreased non-biodegradable organic compounds, from which salt components are substantially removed, is separated to the upper part, and the concentrate of the non-biodegradable organic compounds and salt ingredients is separated to the lower part.

The apparatus for conducting the evaporative concentration is a vacuum system, and an evaporative concentrator commonly used in the technical field to which the invention pertains can be used.

Also disclosed is that the step of evaporative concentration of wastewater may be conducted by evaporating the wastewater in a column to which steam or waste heat discharged from another process is supplied as a heat source. The temperature and the pressure of the supplied steam or waste heat are not specifically limited, and may be appropriately controlled so that the non-biodegradable organic compounds may be sufficiently decreased in the supernatant separated in the evaporative concentration process, and for example, steam of about 2.5 barg or less may be used as a heat source to conduct the evaporative concentration step.

Also disclosed is that the step of evaporative concentration of wastewater may be conducted by heating so that a temperature of steam of the supernatant may become about 80 °C or more, for example about 80 to 100°C.

Wherein, consumption energy may be further reduced by lowering the pressure of a column to decrease the temperature and the amount of steam used as a heat source of the column, or by using waste heat discharged from another process as a heat source.

According to one embodiment of the invention, the evaporative concentration may be conducted under pressure condition of about -100 mmH$_2$O to -10 mmH$_2$O using vacuum system, and in this case, efficiency of evaporative concentration may further increase, and thus, required heat source may decrease and more wastewater may be treated.

And, whether or not the evaporative concentration is completed may be judged by a time when the liquid level of a column or flux of introduced steam decreases.

The COD of the supernatant separated by the evaporative concentration may decrease to less than about 10%, or less than about 7%, or less than about 5% of the COD of wastewater before the evaporative concentration.

And, in the supernatant separated by the evaporative concentration, salt components may be substantially removed. The term "substantially removed" means that in the supernatant, the salt components are not detectable or detected at a concentration of 10 ppm or less, or the salt components are removed about 99.9% to about 100%, or about 99.99% to about 100% compared to the concentration of the salt components included in the wastewater before the evaporative concentration. The supernatant with remarkably decreased COD, from which salt components are substantially removed, may be easily treated by microorganisms.

A part of the supernatant from which salt components are substantially removed may be supplied to a heating furnace and used as steam for fuel, and the remaining part may be sent to a microbial treatment plant and further pass through a microbial degradation process.

Particularly, in case the supernatant is supplied to a heating furnace, it may be re-evaporated and pressurized using steam and the like, and supplied as an atomizing steam of a heating furnace using liquid fuel.

As such, by using the supernatant as steam for fuel, flux of wastewater to be ultimately treated may be reduced, and furthermore, a small amount of organic compounds remaining in the supernatant may be combusted to supply quantity of heat to another process.

### <Example>

### Example 1

For aldol wastewater produced after an aldol process, an evaporative concentration was conducted under the following column conditions, and the pH, the concentration of Na salt, COD (Mn) and COD (Cr) of the wastewater before evaporative concentration and the supernatant after evaporative concentration were respectively measured.
* Evaporative concentration column
Column ID = 1300mm
Column Length = 5500mm (T.L)
Heat source: Steam (2.5barg, 138.86 °C)
Heating temperature: 90 °C
Inflow of wastewater: 3.0 t/h

After the evaporative concentration, a partial stream of the supernatant was pressurized and 5.5barg steamed, and completely combusted and removed by using as atomizing steam in a reformer (furnace and the like), and the remaining stream was sent to a wastewater treatment plant, water passing through microbial degradation was finally discharged, and solid waste made in the form of a cake by dehydration was sent to an additional treatment process.

### Example 2 (not claimed)

For the catalyst wastewater produced in a catalytic process, evaporative concentration was conducted under the following column conditions, and the pH, the concentration of Na salt, COD (Mn) and COD (Cr) of the wastewater before evaporative concentration and the supernatant after evaporative concentration were respectively measured.
* Evaporative concentration column
Column ID = 800mm
Column Length = 4000mm(T.L)
Heat source: Steam (2.5barg, 138.86°C)
Heating temperature: 90 °C
Inflow of wastewater: 0.35 t/h

After evaporative concentration, a partial stream of the supernatant was pressurized and 5.5barg steamed, and completely combusted and removed by using as atomizing steam in a reformer (furnace and the like), and the remaining stream was sent to a wastewater treatment plant, water passing through microbial degradation was finally discharged, and solid waste made in the form of a cake by dehydration was sent to an additional treatment process.

<Measurement method>

1) The concentration of Na salt

A sample and a standard solution were prepared as follows, and analyzed by AAS(Atomic Absorption-Spectrometry) at 589nm.

More specifically, in Example and Comparative Example, for the wastewater, measurement was conducted after 5,000-fold dilution with distilled water, and for the supernatant after evaporative concentration, 50mL of the sample and 2.5 mL of a HCl solution were put, and the solution was made-up with distilled water so that the concentration of HCl became 2mol/L and then measurement was conducted.

As a standard solution, 1000mg/L of a Na standard solution for AAS was prepared into 0.5mg/L, 1.0mg/L solutions, each was taken, 10mL of a HCl solution was added thereto, and the solution was made-up with distilled water so that the concentration of HCl became 2mol/L.

2) COD (Mn)

In a 300mL flask, a suitable amount of the sample was introduced (so that 1/2 or more of the initial sample amount remains after heating for 30 minutes), and distilled water was added so that total volume of the solution became 100mL, and then, 10ml of a sulfuric acid solution (sulfuric acid : distilled water = 1:2 mass ratio) was added. And, 1g of sulfuric acid powder was added thereto, and the solution was shaken and allowed to stand for a few minutes, and then, 10mL of 0.025N $KMnO_4$ was added, followed by heating for 30 minutes in a water bath, of which surface is adjusted to be higher than the sample solution. And then, 10mL of a 0.025N sodium hydroxide standard solution was added, the solution was back-titrated with a 0.025N $KMnO_4$ solution while maintaining 60 to 80°C, and a point at which the solution shows light pink was decided as an end point.

For distilled water, an end point was measured by the same method and substituted into the following Equation for correction, thus obtaining COD (Mn) of the sample.

$$COD(mg/mL) = (b-a) \times f \times (1000 / V) \times 0.2$$

a : 0.025N $KMnO_4$ solution(mL) required for titration of distilled water
b : total 0.025N $KMnO_4$ solution(mL) for titration of sample
f : 0.025N - $KMnO_4$ titer(FACTOR)
v : initial sample amount(mL)

3) COD (Cr)

The COD (Cr) of the sample was measured according to ASTM D1252 (11.02) by a standard test method.

The measurement results of Examples 1 and 2 are shown in the following Table 1.

Table 1

|  |  | pH | Na (unit: ppm) | COD (Mn) (unit: ppm) | COD (Cr) (unit: ppm) |
|---|---|---|---|---|---|
| Example 1 | Wastewater | 13.2 | 12,840 | 10,240 | 121,300 |
|  | Supernatant after evaporative concentration | 3.6 | < 0.2 | 627 | 3140 |
| Example 2* | Wastewater | 5.9 | 18,980 | 12,890 | 65,800 |
|  | Supernatant after evaporative concentration | 3 | <0.1 | 774 | 4920 |
| *not claimed | | | | | |

Referring to the Table 1, it can be seen that by conducting evaporative concentration of wastewater according to the example of the present invention, Na salt was substantially removed in the supernatant, and COD remarkably decreased to about 2.5% to about 7.4% of that before evaporative concentration.

**Claims**

1. A method for treating wastewater which is discharged from an Aldol process consisting of the steps of performing an evaporative concentration of wastewater comprising non-biodegradable organic compounds and salt components at a concentration of 10,000 ppm or more to separate a supernatant to an upper part and a concentrate to a lower part; using a part of the supernatant as a steam for fuel, and degrading a remaining part of the supernatant by microorganisms, wherein vacuum system is used for the evaporative concentration of the wastewater, wherein the wastewater has a pH greater than 6, wherein the method is without acid treatment or use of extractants.

2. The method for treating wastewater according to claim 1, wherein the supernatant is used as an atomizing steam after re-evaporating and pressurizing.

3. The method for treating wastewater according to claim 1, wherein the salt component includes sodium salt ($Na^+$).

4. The method for treating wastewater according to claim 1, wherein the wastewater is concentrated by evaporation using steam or waste heat.

**Patentansprüche**

1. Verfahren zur Behandlung von aus einem Aldol-Prozess abgeführten Abwasser, bestehend aus den Schritten des Durchführens einer Eindampfung von Abwasser, das nicht biologisch abbaubare organische Komponenten und Salzkomponenten mit einer Konzentration von 10.000 ppm oder mehr umfasst, zur Trennung eines Überstands in einen oberen Teil und eines Konzentrats in einen unteren Teil; Verwendens eines Teils von dem Überstand als Dampf für Heizstoff und Abbauens eines verbleibenden Teils des Überstands durch Mikroorganismen, wobei ein Vakuumsystem zur Eindampfung des Abwassers verwendet wird, wobei das Abwasser einen pH-Wert von mehr als 6 aufweist, wobei das Verfahren ohne Säurebehandlung oder Verwendung von Extraktionsmitteln erfolgt.

2. Verfahren zur Behandlung von Abwasser nach Anspruch 1, wobei der Überstand nach dem erneuten Verdampfen und Druckbeaufschlagen als Zerstäuberdampf eingesetzt wird.

3. Verfahren zur Behandlung von Abwasser nach Anspruch 1, wobei die Salzkomponente Natriumsalz ($Na^+$) enthält.

4. Verfahren zur Behandlung von Abwasser nach Anspruch 1, wobei das Abwasser unter Verwendung von Dampf oder Abwärme eingedampft wird.

**Revendications**

1. Procédé pour le traitement d'eaux usées qui sont déchargées d'un processus aldol constitué des étapes de réalisation d'une concentration par évaporation d'eaux usées comprenant des composés organiques non biodégradables et des composants salins à raison d'une concentration de 10 000 ppm ou plus, pour séparer un surnageant en une partie supérieure et un concentré en une partie inférieure ; d'utilisation d'une partie du surnageant comme vapeur pour un combustible, et de dégradation d'une partie restante du surnageant par des micro-organismes, un système de vide étant utilisé pour la concentration par évaporation des eaux usées, les eaux usées possédant un pH supérieur à 6, le procédé étant sans traitement à l'acide ou utilisation d'agents d'extraction.

2. Procédé pour le traitement d'eaux usées selon la revendication 1, le surnageant étant utilisé comme vapeur d'atomisation après ré-évaporation et pressurisation.

3. Procédé pour le traitement d'eaux usées selon la revendication 1, le composant salin comprenant un sel de sodium ($Na^+$).

4. Procédé pour le traitement d'eaux usées selon la revendication 1, les eaux usées étant concentrées par évaporation à l'aide de vapeur ou de chaleur perdue.

FIG 1

```
            ┌──────────────┐
            │  Wastewater  │
            └──────┬───────┘
                   │
                   ▼
┌─────────────────────────────────┐
│ 1. pH modification(oil/water    │──→ Separate treatment of oil
│ separation after acid treatment)│
├─────────────────────────────────┤
│ 2. wastewater treatment plant   │──→ made into sludge (cake)
│ (microbial treatment)           │    by dehydration
└─────────────────┬───────────────┘
                  │
                  ▼
         ┌──────────────────┐
         │  Final discharge │
         └──────────────────┘
```

FIG 2

```
            ┌──────────────┐
            │  Wastewater  │
            └──────┬───────┘
                   │
                   ▼
┌─────────────────────────────────┐
│ 1.evaporative concentration     │        ┌──────────────────────┐     ┌────────────────┐
├─────────────────────────────────┤    ┌──→│ 2-1. pressurization  │──→  │ steam for fuel │
│        Supernatant              │────┤   │      system          │     └────────────────┘
├─────────────────────────────────┤    │   └──────────────────────┘
│ Concetrate at the lower part    │    │
│ (salt components and non-       │────┤   ┌──────────────────────────┐
│ biodegradable organic compounds)│    └──→│ 2-2. wastewater treatment│──→ made into sludge(cake)
└─────────────────┬───────────────┘        │ plant (microbial         │    by dehydration
                  │                         │ treatment)               │
                  ▼                         └───────────┬──────────────┘
            taking-out                                  │
                                                        ▼
                                             ┌──────────────────┐
                                             │ final diacharge   │
                                             └──────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140113295
- EP 0631988 A
- EP 0926100 A
- EP 2690071 A1
- EP 2508489 A2
- CN 102730894 A
- JP H01262981 A